# EUROPÄISCHE PATENTSCHRIFT

(11) **EP 2 364 584 B1**
(45) Veröffentlichungstag und Bekanntmachung des Hinweises auf die Patenterteilung: **12.08.2015**
(21) Anmeldenummer: 11150021.1
(22) Anmeldetag: 03.01.2011
(51) Int. Cl.: A01D 34/30, F16D 3/10, F16D 3/12

(54) **Schneidwerk für eine Erntemaschine**
Cutting assembly for an agricultural harvester
Barre de coupe pour une moissonneuse

(30) Priorität: 11.03.2010 DE 102010011123
(43) Veröffentlichungstag der Anmeldung: 14.09.2011
(73) Patentinhaber: CLAAS Selbstfahrende Erntemaschinen GmbH, 33428 Harsewinkel (DE)
(72) Erfinder: Bürmann, Dominik, 33415, Verl (DE)

(56) Entgegenhaltungen:
- DE-U1- 9 110 394
- GB-A- 2 327 254

## Beschreibung

Die vorliegende Erfindung betrifft ein Schneidwerk für eine Erntemaschine wie etwa einen Feldhäcksler, einen Mähdrescher oder dergleichen. Ein solches Schneidwerk ist meist austauschbar an der Erntemaschine montiert und umfasst einen Trägerrahmen mit zwei Seitenwangen und einer sie verbindenden Bodenplatte, an deren Vorderkante ein Messer in Querrichtung beweglich montiert ist. Indem Schneidkanten dieses Messers an Schneidkanten eines Gegenmessers vorbeigleiten, wird Erntegut, das durch die Vorwärtsbewegung des Schneidwerks zwischen die Schneidkanten gelangt, geschnitten und fällt auf die Bodenplatte, wo es von einer Einzugwalze erfasst und weitergefördert wird. Das Messer kommt in jeder Periode seiner oszillierenden Bewegung zweimal zum Stillstand. Die anschließende, sich über je ein Viertel der Bewegungsperiode erstreckende Beschleunigungsphase belastet einen das Messer antreibenden Motor; in sich anschließenden, ebenfalls jeweils ein Viertel der Bewegungsperiode einnehmenden Verzögerungsphasen wirkt das Messer antriebsunterstützend. Dies führt zu Gleichlaufstörungen, die erhöhten Verschleiß verursachen und die Funktion anderer über den gleichen Motor versorgter Aggregate beeinträchtigen können, insbesondere dann, wenn Resonanzen auftreten.

Aus DE 91 10 394 U1 ist ein Schneidwerk nach dem Oberbegriff des Anspruchs 1 bekannt, bei dem zur Unterdrückung von Schwingungen eine elastische schwingungsdämpfende Kupplung in einen Antriebsstrang des Messers eingefügt ist. Jede Vor- oder Nacheilung des Messers gegenüber seinem Motor führt hier zu einer elastischen Verformung der Kupplung, durch deren Bedämpfung Antriebsenergie verloren geht und die Kupplung erhitzt. Die Lebensdauer der Kupplung ist dadurch begrenzt. Wenn der Antriebsstrang in Resonanz gerät, muss die Kupplung eine hohe Verlustleistung dissipieren, die nach kurzer Zeit zur Überhitzung führen kann.

Aufgabe der vorliegenden Erfindung ist, ein Schneidwerk für eine Erntemaschine anzugeben, das einen robusten, langlebigen Antriebsstrang aufweist und es erlaubt, die Rückwirkungen der ungleichförmigen Messerbewegung auf einen Motor der Erntemaschine sowie andere über diesen Motor versorgte Aggregate wie etwa ein Häcksel- oder Dreschwerk zu reduzieren.

Die Aufgabe wird gelöst, indem bei einem Schneidwerk mit einem Trägerrahmen, wenigstens einem ersten in dem Trägerrahmen verschiebbaren Messer, einem drehantreibbaren, in sich verdrehbaren Antriebsstrang für das erste Messer und einem Exzenter zum Umsetzen einer Drehung des Antriebsstrangs in eine oszillierende Bewegung des ersten Messers der Antriebsstrang ein drehspielhaltiges Element umfasst, das eine nichtlineare Rückstellkennlinie aufweist. Die Nichtlinearität der Rückstellkennlinie bewirkt, dass die Frequenz einer eventuellen Oszillation des Antriebsstrangs mit ihrer Amplitude variiert. Eine äußere Anregung kann daher nur so lange eine Schwingung des Antriebsstrangs antreiben, wie die Frequenzen beider übereinstimmen. Die mit zunehmender Amplitude auftretende Frequenzverschiebung beseitigt die Übereinstimmung, so dass die Amplitude der Schwingung des Antriebsstrangs begrenzt bleibt, ohne dass es dazu zwangläufig einer Dämpfung bedarf.

Vorzugsweise besteht die Nichtlinearität darin, dass die Rückstellkennlinie ausgehend von einer Neutralstellung - die als Nullpunkt der Verdrehung des Antriebsstrangs angenommen werden kann - wenigstens einen ersten Abschnitt bei geringer Auslenkung und einen zweiten Abschnitt bei größerer Auslenkung aufweist, wobei die Zunahme des Rückstellmoments mit der Auslenkung im zweiten Abschnitt deutlich größer als im ersten Abschnitt ist.

Vorzugsweise ist das Rückstellmoment im ersten Abschnitt vernachlässigbar, d.h. ein Rückstellmoment, das den Antriebsstrang in die Neutralstellung zurücktreibt, ist nicht vorhanden oder im Vergleich zu anderen im Betrieb auf den Antriebsstrang einwirkenden Drehmomenten so gering, dass es dessen dynamisches Verhalten nicht beeinflusst. Das verschwindende Rückstellmoment im ersten Abschnitt erlaubt es, eine antreibende Rückwirkung des Messers auf den Motor zu unterdrücken, indem es zeitweilig eine Voreilung des Messers gegenüber dem Antrieb zulässt. Erst wenn das Messer so weit verlangsamt ist, dass diese Voreilung wieder aufgezehrt ist, wird es vom Motor wieder angetrieben.

Eine Verzögerung der voreilenden Messerbewegung kann durch Reibung des Messers in einer Führung am Trägerrahmen oder durch Schneiden von Erntegut erfolgen.

Die Zunahme des Rückstellmoments im zweiten Abschnitt kann praktisch unendlich sein, d.h. der zweite Abschnitt stellt gleichsam einen harten Anschlag dar, der eine obere Grenze für die im Betrieb erreichbare Verdrehung des Antriebsstrangs markiert.

Zwischen dem im Wesentlichen rückstellmomentfreien ersten Abschnitt und dem harten zweiten Abschnitt kann ein dritter Abschnitt vorgesehen sein, in dem die Zunahme des Rückstellmoments mit der Auslenkung zwischen den Werten des ersten und des zweiten Abschnitts liegt. Dieser dritte Abschnitt verhindert, dass der Motor durch einen harten Stoß plötzlich gebremst wird, wenn die Voreilung des Messers gegenüber dem Antriebsstrang wieder aufgezehrt ist. Stattdessen wird der Motor durch den allmählichen Auf- und Wiederabbau einer Torsionsspannung kontinuierlich belastet, und abrupte Geschwindigkeitssprünge werden vermieden.

Um eine zur Schwingungsreduzierung wirksame Voreilung des Messers zu ermöglichen, sollte der erste Abschnitt zweckmäßigerweise die Neutralstellung beinhalten und sich über ein Winkelintervall von wenigstens fünf Grad erstrecken. Ein zu großes Winkelintervall des ersten Bereichs kann dazu führen, dass die Messerbewegung stark von äußeren Einflüssen wie etwa schwankender Dichte des Ernteguts beeinflussbar ist. Daher ist der erste Bereich vorzugsweise auf ein Winkelintervall von höchstens 20° beschränkt.

Um die oben definierte Rückstellkennlinie zu realisieren, ist das drehspielhaltige Element zwischen zwei Anschlägen verdrehbar. Die zwei Anschläge dieses Elements geben die Grenzen des ersten Bereichs vor.

Der erste Bereich kann auch durch ein torsionselastisches Element im Antriebsstrang realisiert werden, sofern dessen Auslenkung durch Anschläge begrenzt ist und das Rückstellmoment des torsionselastischen Elements klein ist gegenüber den Drehmomenten, denen der Antriebsstrang im Betrieb ausgesetzt ist. Vorzugsweise ist das torsionselastische Element mit dem drehspielhaltigen Element kombiniert, um den dritten Bereich der Rückstellkennlinie zu bilden.

Damit das torsionselastische Element in dem Schneidwerk, insbesondere an einer Seitenwange desselben, gut untergebracht werden kann, sollte es einen möglichst geringen Durchmesser haben und trotzdem mit einem hohen Drehmoment belastbar sein. Diese Anforderung lässt sich erfüllen, wenn das torsionselastische Element eine Hülse aus Elastomermaterial mit einer inneren und einer äußeren Umfangsfläche umfasst und eine diese Umfangsfläche mit einem antriebsseitigen Abschnitt des Antriebsstrangs und die andere Umfangsfläche mit einem messerseitigen Abschnitt des Antriebsstrangs kraftschlüssig verbunden ist. Um die Drehmomentbelastbarkeit eines solchen Elements zu erhöhen, kann die Hülse verlängert werden, es ist jedoch nicht notwendig, den Durchmesser des Elements zu vergrößern.

Um eine Überbeanspruchung des torsionselastischen Elements zu verhindern, ist dessen Drehspiel vorzugsweise wenigstens einseitig, vorzugsweise beidseitig, durch einen Anschlag begrenzt. Wenn der Anschlag einseitig ist, ist er vorzugsweise so platziert, dass er in einer Beschleunigungsphase des Messers beansprucht ist, da das drehspielhaltige Element in dieser Phase erheblich höheren Beanspruchungen ausgesetzt sein kann als während einer Verzögerungsphase des Messers, in der das Messer dazu neigt, seinem Antrieb vorzueilen.

Die üblicherweise in einem Schneidwerk vorhandene Einzugwalze ist zweckmäßigerweise an den Antriebsstrang des Messers gekoppelt. Das drehspielhaltige Element kann zwischen der Einzugwalze und dem ersten Messer angeordnet sein, so dass die Ungleichförmigkeit der Messerbewegung den Gleichlauf der Einzugwalze nicht beeinträchtigt.

Es kann aber auch zweckmäßig sein, die Einzugwalze über das drehspielhaltige Element anzutreiben; eine Kopplung zwischen der Einzugwalze und dem Messer erlaubt es dann, die Einzugwalze als eine zusätzliche Schwungmasse zu nutzen, um den Gleichlauf des Messers zu verbessern.

Ein zweites Messer kann über den Antriebsstrang und die Einzugwalze angetrieben sein.

Wenn das zweite Messer gegenphasig zum ersten angetrieben ist, bleibt im Laufe der Bewegung der Messer ihr gemeinsamer Schwerpunkt im Wesentlichen in Ruhe, was einen gleichmäßigen, erschütterungsarmen Betrieb des Schneidwerks begünstigt.

Denkbar ist auch, dass das zweite Messer um 90° gegen das erste Messer phasenversetzt angetrieben ist. Auf diese Weise ist eine Vergleichmäßigung der Belastung des Antriebs erreichbar, da jeweils eine Verzögerungsphase des ersten Messers mit einer Beschleunigungsphase des zweiten Messers übereinfällt und umgekehrt.

Um den Gleichlauf des Messers zu verbessern sowie um gegebenenfalls eine Oszillationsfrequenz des Messerantriebs so zu verschieben, dass im Betrieb keine störende Resonanz angeregt wird, kann zwischen dem drehspielhaltigen Element und dem ersten Messer im Antriebsstrang eine Schwungmasse angeordnet sein.

Der Exzenter, der die Drehung des Antriebstrangs in die lineare Bewegung des Messers umsetzt, umfasst vorzugsweise zwei gelenkig verbundene Arme, von denen ein erster mit der Antriebswelle drehbar ist und der zweite an das Messer angelenkt ist.

Der zweite Arm ist vorzugsweise als ein in einem Hohlraum umlaufender Rotor ausgebildet.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf ein erfindungsgemäßes Schneidwerk;
- Fig. 2: eine Getriebebaugruppe des Schneidwerks aus Fig. 1;
- Fig. 3: eine schematische Darstellung eines Exzenters des Schneidwerks aus Fig. 1;
- Fig. 4: eine schematische Darstellung eines drehspielhaltigen Elements;
- Fig. 5: eine schematische Darstellung eines torsionselastischen Elements;
- Fig. 6: eine zu Fig. 5 analoge Ansicht eines torsionselastischen Elements gemäß einer zweiten Ausgestaltung;
- Fig. 7: einen Schnitt durch das torsionselastische Element der Fig. 6;
- Fig. 8: einen Schnitt durch ein torsionselastisches Element gemäß einer dritten Ausgestaltung;
- Fig. 9: einen Schnitt durch ein torsionselastisches Element gemäß einer vierten Ausgestaltung;
- Fig. 10: einen Schnitt durch ein torsionselastisches und drehspielhaltiges Element;
- Fig. 11: ein Diagramm, das den Zusammenhang zwischen Auslenkung und Rückstelldrehmoment bei verschiedenen Ausgestaltungen des Antriebsstrangs darstellt; und
- Fig. 12: eine Draufsicht auf ein Schneidwerk gemäß einer zweiten Ausgestaltung.

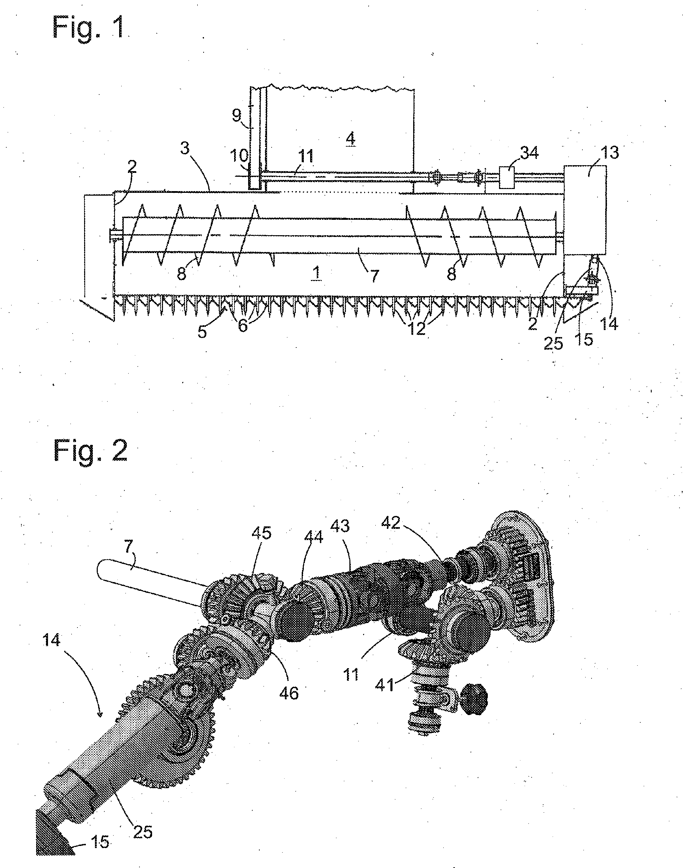

Fig. 1 ist eine Draufsicht auf ein Schneidwerk zur Verwendung an einem Mähdrescher, einem Feldhäcksler oder einer anderen selbstfahrenden Erntemaschine. Ein Trägerrahmen des Schneidwerks umfasst eine im Wesentlichen horizontale Bodenplatte 1, vertikale Seitenwangen 2 an einem linken und rechten Rand der Bodenplatte 1 sowie eine Rückwand 3, die die Hinterkanten der Bodenplatte 1 und der Seitenwangen 2 verbindet und eine mittige Öffnung aufweist, an der ein Schrägförderer 4 anschließt. Ein Messer 5 mit einer Vielzahl von in Draufsicht dreieckigen Zähnen 6 ist in einer Schiene am vorderen Rand der Bodenplatte 1 horizontal verschiebbar montiert. Am vorderen Rand der Bodenplatte 1 ortsfest montierte, nach vorn vorspringende Finger 12 haben nach hinten offene Schlitze, in die die Zähne in Querrichtung bewegbar eingreifen.Indem schräge Kanten der Zähne 6 über seitliche Kanten der Finger 12 herstreichen, wird in ihre Reichweite gelangendes Erntegut gekappt und fällt auf die Bodenplatte 1.

Eine zwischen den Seitenwangen 2 drehbar montierte Einzugwalze 7 ist mit gegenläufigen Schnecken 8 besetzt, die das abgeschnittene Erntegut von den Seiten der Bodenplatte 1 zur Mitte schieben und dem Schrägförderer 4 zuführen.

Ein gemeinsamer Antriebsstrang des Messers 5 und der Einzugwalze 7 umfasst hier einen von einem Motor der Erntemaschine angetriebenen Riemen 9 und eine Welle 11, die eine von dem Riemen 9 umschlungene Riemenscheibe 10 trägt und sich im Wesentlichen parallel zur Rückwand 3 bis in eine Getriebebaugruppe 13 an der rechten Seitenwange 2 erstreckt. Wie in Fig. 2 gezeigt, treibt die Getriebebaugruppe 13 einerseits, über ein erstes Paar von Kegelrädern 41, 42, eine Gelenkwelle 43 und über ein zweites Paar Kegelräder 44,45 und Stirnräder 47, 48, 49 die Einzugwalze 7 und andererseits, über eine Gelenkwelle 14, die ein mit dem Kegelrad 45 der Einzugwalze 7 kämmendes Kegelrad 46 trägt, und einen Exzenter 15 (siehe Fig. 1), das Messer 5 an.

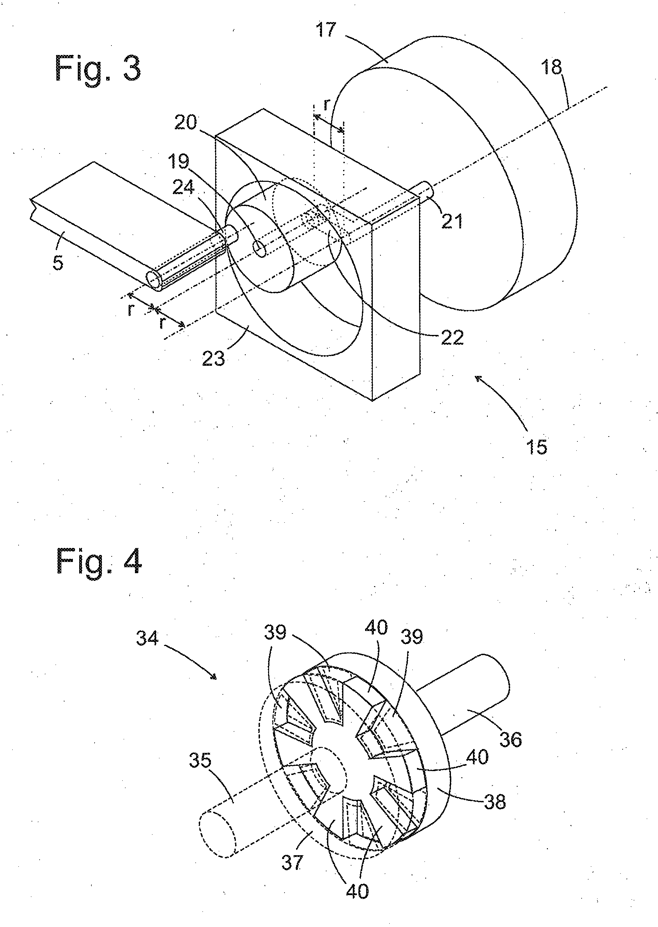

Fig. 3 zeigt eine schematische Darstellung des Exzenters 15. Ein Schwungrad 17 bildet einen Abschluss der in Fig. 2 nicht dargestellten Gelenkwelle 14. Die Achse der Gelenkwelle 14 ist in Fig. 2 als strichpunktierte Linie 18 eingezeichnet. Das Schwungrad 17 trägt, parallel zur Achse 18 um einen Abstand r versetzt, eine Welle 19, auf der ein Zahnrad 20 drehbar gehalten ist. In Fig. 3 ist als Verbindung zwischen der Welle 19 und dem Schwungrad 17 ein die Gelenkwelle 14 verlängernder Stift 21 und ein radial ausgerichteter Arm 22 gezeigt; in der Praxis ist die Welle 19 eher unmittelbar am Schwungrad 17 verankert, und einander zugewandte Stirnseiten des Schwungrades 17 und des Zahnrades 20 sind allenfalls durch einen schmalen Spalt getrennt.

Das Zahnrad 20 kämmt mit einem an dem Trägerrahmen ortsfesten Hohlrad 23, wobei die Wälzkreisradien des Zahnrades 20 und des Hohlrades 23 r bzw. 2r betragen. Das Zahnrad 20 trägt einen Stift 24, der drehbar in ein Kopfende des Messers 5 eingreift. Die Achse des Stifts 24 ist gegen diejenige des Stifts 21 wieder um den Abstand r versetzt. Der Eingriff in das Hohlrad 23 zwingt das Zahnrad 20 zu einer Drehung mit zur Drehung des Schwungrads 17 entgegengesetztem Drehsinn. Infolge dieser Drehung bewegt sich der Stift 24, ohne einer weiteren Führung durch Teile außerhalb des Exzenters 15 zu bedürfen, auf einer horizontalen Ebene hin und her. In der in Fig. 3 gezeigten Stellung befindet sich der Stift 24 und mit ihm das Messer 5 an einem Umkehrpunkt seiner Bahn, seine Geschwindigkeit und Beschleunigung sind Null, und auch das zum Antreiben der Messerbewegung erforderliche Drehmoment verschwindet. Nach einer viertel Umdrehung des Arms 22 befindet sich das Zahnrad 20 am oberen oder unteren Scheitelpunkt seiner Bahn, der Stift 24 liegt auf der Achse 18, und das Messer 5 hat seine höchste Geschwindigkeit erreicht. Das Antriebsdrehmoment ist hier wieder Null, da das Messer 5 nicht mehr beschleunigt wird; ein Maximum des Antriebsdrehmoments liegt zwischen diesen beiden Stellungen bei einem Drehwinkel des Arms 22 von 45°.

Nach Passieren der 90°-Stellung wird das Messer 5 wieder verzögert, das heißt es übt seinerseits eine antreibende Kraft auf den Exzenter aus.

Um die Rückwirkungen dieser Drehmomentschwankungen auf einen Antriebsmotor der Erntemaschine zu verringern, sind in den Antriebsstrang jeweils ein torsionselastisches Element 25 und ein drehspielhaltiges Element 34 eingefügt. Vorzugsweise sind beide Elemente 25, 34 zwischen der Einzugwalze 7 und dem Exzenter 15 in den Antriebsstrang eingefügt, um nicht nur den Motor, sondern auch die Einzugwalze 7 von den durch das Messer 5 verursachten Gleichlaufschwankungen zu entkoppeln. Unter Umständen kommt auch eine Anbringung eines der Elemente zwischen Motor und Einzugswalze 7 in Betracht, wie in Fig. 1 für das Element 34 gezeigt.

Fig. 4 zeigt eine schematische Darstellung eines exemplarischen Aufbaus des drehspielhaltigen Elements 34. In der Darstellung der Fig. 4 ist das Element 34 in die Welle 11 eingefügt; es könnte aber auch z.B. Teil der Gelenkwelle 14 sein. Das drehspielhaltige Element 34 teilt die Welle 11 in einen motorseitigen Abschnitt 35 und einen messerseitigen Abschnitt 36. Beide Abschnitte 35, 36 tragen jeweils einen von zwei einander zugewandten Flanschen 37, 38, die sternförmig angeordnete, mit Drehspiel ineinander greifende Zähne 39 bzw. 40 tragen. In der gezeigten Ausgestaltung trägt jeder Flansch 37, 38 je sechs Zähne 39, 40, die sich tortenstückförmig jeweils über einen Winkel von 25° erstrecken, was ein Drehspiel zwischen den Abschnitten 35, 36 von insgesamt 10° ergibt.

Die Flansche 37, 38 sind zu ihrem Schutz zweckmäßigerweise in einem zylindrischen Gehäuse eingeschlossen, das in Fig. 4 nicht dargestellt ist und mit einem der beiden Abschnitte 35, 36 drehfest verbunden sein kann.

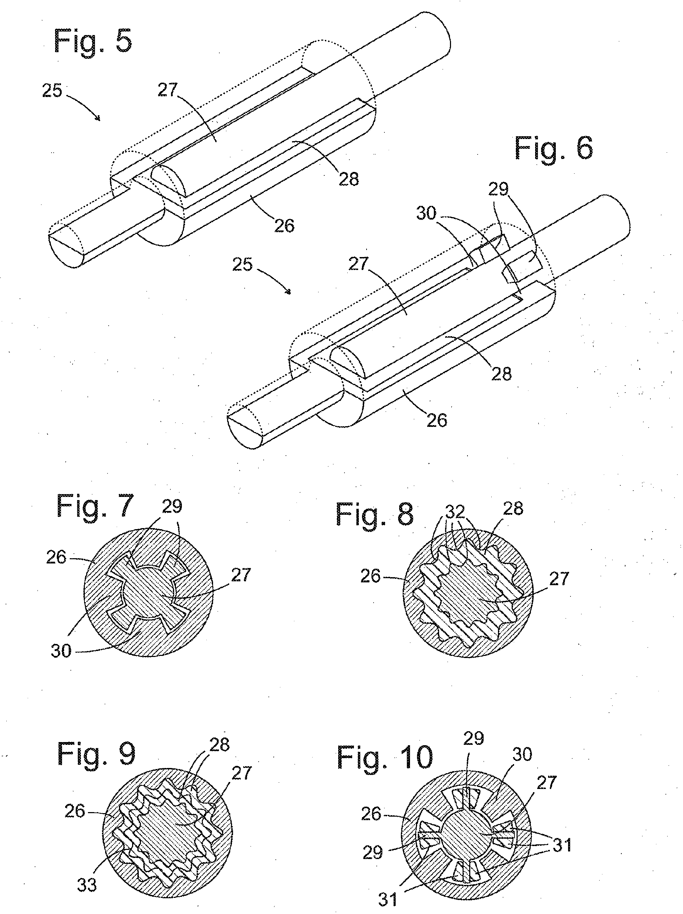

Eine erste Ausgestaltung des torsionselastischen Elements 25 ist in Fig. 5 in einer teilaufgeschnittenen perspektivischen Ansicht gezeigt. Das torsionselastische Element 25 setzt sich im Wesentlichen zusammen aus einem zylindrischen Becher 26, einem koaxial in den Becher 26 eingreifenden Wellenzapfen 27 und einer Hülse 28 aus Gummi oder anderem geeigneten Elastomermaterial, die einen Zwischenraum zwischen dem Wellenzapfen 27 und dem Becher 26 ausfüllt und an ihrer inneren bzw. äußeren Umfangsfläche kraftschlüssig, zum Beispiel durch Klebung oder Pressung, mit dem Wellenzapfen 27 bzw. dem Becher 26 verbunden ist. Die Hülse 28 lässt eine Drehbewegung des Wellenzapfens 27 und des Bechers 26 relativ zueinander in begrenztem Umfang zu; in der Praxis ist die Steifigkeit der Hülse 28 zweckmäßigerweise so ausgelegt, dass unter normalen Einsatzbedingungen aus einer Gleichgewichtsstellung heraus Winkelausschläge von einigen Grad in beide Richtungen möglich sind. Nur in einer der zwei Anschlagstellungen des drehspielhaltigen Elements 34 ist dieses in der Lage, ein Drehmoment des Motors an das Messer zu übertragen. Wenn das drehspielhaltige Element 34 sich in dieser Anschlagstellung befindet und das Messer durch das übertragene Drehmoment beschleunigt wird, verdrehen sich Becher 26 und Wellenzapfen 27 des torsionselastischen Elements 25 gegeneinander, und in der Hülse 28 wird Spannung aufgebaut. Die Beschleunigung des Messers 5 wird dadurch hinausgezögert, und das vom Motor aufzubringende Drehmoment reduziert sich. In einer späteren Phase der Bewegung des Messers 5 baut sich die Spannung in der Hülse 28 zunächst wieder ab, und sobald sie Null ist, beginnt das Messer 5 vorzueilen, wobei die Flansche 37, 38 des drehspielhaltigen Elements 24 sich aus der Anschlagstellung lösen und gegeneinander rotieren. Das Drehspiel des Elements 24 ist so bemessen, dass das Messer 5 unter normalen Betriebsbedingungen wieder zu verzögern beginnt, bevor das Element 34 seine zweite Anschlagstellung erreicht. Indem die Elemente 25, 34 den Motor des Erntefahrzeugs vor der antreibenden Wirkung des Messers 5 abschirmen, verbessern sie den Gleichlauf des Motors und anderer von ihm angetriebener Aggregate.

Eine zweite Ausgestaltung des torsionselastischen Elements 25 ist in Fig. 6 in einer zu Fig. 5 analogen Ansicht und in Fig. 7 in einem Querschnitt dargestellt. Der Wellenzapfen 27 ist hier mit einer Mehrzahl von radial abstehenden Schaufeln 29 versehen, und zu diesen Schaufeln 29 komplementäre Schaufeln 30 erstrecken sich von der zylindrischen Wand des Bechers 26 nach innen. Die Schaufeln 29, 30 schaffen eine harte Begrenzung der Winkelbewegungsfreiheit des Elements 25; ein Reißen der Hülse 28, das bei der Ausgestaltung der Fig. 4 bei einer übermäßigen Verdrehung des Wellenzapfens 27 und des Bechers 26 gegeneinander möglich ist, ist so ausgeschlossen.

Eine dritte Ausgestaltung des torsionselastischen Elements 25 ist in Fig. 8 im Querschnitt gezeigt. Hier sind die einander zugewandten Oberflächen des Bechers 26 und des Wellenzapfens 27 mit abgerundeten Riffeln versehen. In der in Fig. 8 gezeigten Ruhestellung des Elements 25 liegen sich jeweils Kämme 32 der Riffeln des Bechers 26 Rillen des Wellenzapfens 27 gegenüber und umgekehrt. Die Riffeln überlappen zwar nicht in radialer Richtung wie die Schaufeln 29, 30 der Ausgestaltung der Fig. 6 und 7, sie verhindern jedoch ebenfalls eine übermäßige Verdrehung des Bechers 26 und des Wellenzapfens 27 gegeneinander. Außerdem sorgen sie dafür; dass das Rückstelldrehmoment des Elements 25 deutlich stärker als linear mit der Auslenkung zunimmt, wenn das Element 25 sich einer Auslenkung nähert, in der sich die Kämme 32 der Riffeln von Becher 26 und Wellenzapfen 27 gegenüber liegen.

Um die Nachgiebigkeit des Elements 25 einzustellen, kann die Gummihülse 28, wie in Fig. 9 gezeigt, durch ein oder mehrere darin eingebettete, komplementär zu den Riffeln 32 gewellte metallische Hülsen 33 in mehrere Lagen unterteilt sein.

Ein gleichzeitig drehspielhaltiges und torsionselastisches Element ist in Fig. 10 in einem axialen Querschnitt gezeigt. Schaufeln 29, 30 des Wellenzapfens 27 und der Hülse 28 erstrecken sich hier im Wesentlichen über die gesamte Länge der Hülse 28, und in jedem Zwischenraum zwischen zwei Schaufeln 29, 30 ist ein Gummipuffer 31 angebracht. Die Gummipuffer 31 füllen die Zwischenräume nicht vollständig aus, so dass bei dieser Ausgestaltung Wellenzapfen 27 und Hülse 28 ein Stück weit gegeneinander verdrehbar sind, ohne dass eine Rückstellkraft wirksam wird.

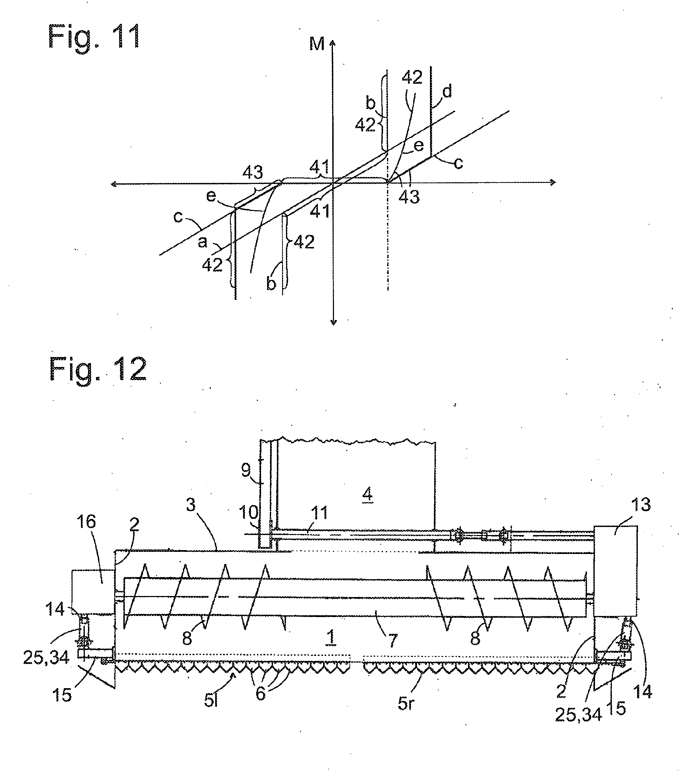

Fig. 11 zeigt den Zusammenhang zwischen Auslenkung θ und Rückstell-Drehmoment M für verschiedene Ausgestaltungen des Antriebsstrangs. Ein im Wesentlichen linearer Zusammenhang entsprechend der Kurve a ergäbe sich im nicht erfindungsgemäßen Fall, dass der Antriebsstrang zwar das torsionselastische Element 25 der Fig. 5, aber kein drehspielhaltiges Element 34 enthielte. Derselbe lineare Zusammenhang innerhalb eines gegebenen Winkelintervalls 41 um die Ruheposition in Kombination einem sehr steilen Anstieg des Rückstellmoments jenseits der Grenzen des Winkelintervalls 41, entsprechend der Kurve b, ergibt sich, wenn der Antriebsstrang das torsionselastische Element 25 der Fig. 6, aber nicht das drehspielhaltige Element 34 enthält.

Eine verschwindende Rückstellkraft im Winkelintervall 41 und eine linear zunehmende Rückstellkraft in Bereichen 42 jenseits der Grenzen dieses Intervalls 41, entsprechend der Kurve c, ergibt sich, wenn das drehspielhaltige Element 34 der Fig. 4 und das torsionselastische Element 25 der Fig. 5 im Antriebsstrang in Reihe verbunden sind. Die Kombination des drehspielhaltigen Elements 34 mit dem torsionselastischen Element 25 der Fig. 6 und 7 liefert die mit d bezeichnete Kennkurve. Ein mehr als linearer Anstieg in Bereichen 42, 43, gemäß Kurve e, ergibt sich, wenn das drehspielhaltige Element 34 mit dem torsionselastischen Element gemäß Fig. 8 oder 9 kombiniert wird. Ein ähnliches Verhalten liefert für sich allein das Element der Fig. 10.

Fig. 12 zeigt eine zu Fig. 1 analoge Draufsicht auf ein Schneidwerk gemäß einer abgewandelten Ausgestaltung. Die Komponenten 1 bis 4 und 7 bis 15 sind im Wesentlichen die gleichen wie im Falle der Fig. 1 und werden nicht erneut beschrieben. Anstelle eines einzigen, sich über die gesamte Breite der Bodenplatte 1 erstreckenden Messers 5 sind hier zwei Messer 51, 5r vorgesehen, die sich jeweils entlang einer linken bzw. rechten Hälfte der Bodenplatte 1 erstrecken. Das Messer 5r ist über die Welle 11, die Getriebebaugruppe 13 die Gelenkwelle 14 und den Exzenter 15 an der rechten Seitenwange 2 des Trägerrahmens angetrieben, das linke Messer 51 über die Welle 11, die rechte Getriebebaugruppe 13, die Einzugwalze 7, eine Getriebebaugruppe 16und eine Gelenkwelle 14 an der linken Seitenwange 2. Die Getriebebaugruppe 16 umfasst zu den Stirnrädern 47, 48, 49 und den Kegelrädern 45, 46 spiegelbildliche Räder an der linken Seitenwange 2. Drehspielhaltige Elemente 34 und torsionselastische Elemente 25 in den Gelenkwellen 14, ggf. in der in Fig. 9 dargestellten Form kombiniert, schützen den Motor vor von den Messern 51, 5r verursachten Gleichlaufstörungen. Indem die Messer 51, 5r jeweils spiegelbildlich zueinander angetrieben sind, das heißt sich gleichzeitig zur Mitte hin bzw. von der Mitte fortbewegen, ist ein sehr erschütterungsarmer Betrieb der Messer möglich.

Anstatt die Messer 51, 5r gegenphasig anzutreiben, käme auch ein um eine Viertelperiode gegeneinander phasenversetzter Betrieb in Betracht. Dadurch würden jeweils Verzögerungsphasen des einen der beiden Messer 51, 5r mit Beschleunigungsphasen des jeweils anderen zusammenfallen, was ebenfalls zu einer Vergleichmäßigung der Belastung des Antriebs beiträgt. Insbesondere bei dieser Ausgestaltung kann es zweckmäßig sein, nur ein einziges torsionselastisches Element 25 in einer der beiden Gelenkwellen 14 vorzusehen, oder das torsionselastische Element 25 an der Welle 11 anzubringen, um gekoppelte Schwingungen der Messer 51, 5r zu unterbinden..

### Bezugszeichen

- 1: Bodenplatte
- 2: Seitenwange
- 3: Rückwand
- 4: Schrägförderer
- 5: Messer
- 6: Zahn
- 7: Einzugwalze
- 8: Schnecke
- 9: Riemen
- 10: Riemenscheibe
- 11: Welle
- 12: Riemen
- 13: Getriebebaugruppe
- 14: Gelenkwelle
- 15: Exzenter
- 16: Getriebebaugruppe
- 17: Schwungrad
- 18: Achse
- 19: Welle
- 20: Zahnrad
- 21: Stift
- 22: Arm
- 23: Hohlrad
- 24: Stift
- 25: torsionselastisches Element
- 26: Becher
- 27: Wellenzapfen
- 28: Hülse
- 29: Schaufel
- 30: Schaufel
- 31: Gummipuffer
- 32: Riffel
- 33: Hülse
- 34: drehspielhaltiges Element
- 35: Wellenabschnitt
- 36: Wellenabschnitt
- 37: Flansch
- 38: Flansch
- 39: Zahn
- 40: Zahn
- 41: Kegelrad
- 42: Kegelrad
- 43: Gelenkwelle
- 44: Kegelrad
- 45: Kegelrad
- 46: Kegelrad

## Patentansprüche

1. Schneidwerk für eine Erntemaschine, mit einem Trägerrahmen (1, 2, 3), wenigstens einem ersten in dem Trägerrahmen (1, 2, 3) verschiebbaren Messer (5; 5r), einem drehantreibbaren, in sich verdrehbaren Antriebsstrang (9, 10, 11, 13, 14) für das erste Messer (5; 5r) und einem Exzenter (15) zum Umsetzen einer Drehung des Antriebsstrangs (9, 10, 11, 13, 14) in eine oszillierende Bewegung des ersten Messers (5; 5r), **dadurch gekennzeichnet, dass** der Antriebsstrang (9, 10, 11, 13, 14) zumindest ein drehspielhaltiges Element (34) umfasst, das eine nichtlineare Rückstellkennlinie aufweist.

2. Schneidwerk nach Anspruch 1, **dadurch gekennzeichnet, dass** die Rückstellkennlinie ausgehend von einer Neutralstellung wenigstens einen ersten Abschnitt (41) bei geringer Auslenkung und einen zweiten Abschnitt (42) bei größerer Auslenkung aufweist, wobei die Zunahme des Rückstellmoments mit der Auslenkung im zweiten Abschnitt (42) deutlich größer als im ersten Abschnitt (41) ist.

3. Schneidwerk nach Anspruch 2, **dadurch gekennzeichnet, dass** das Rückstellmoment im ersten (41) Abschnitt vernachlässigbar ist.

4. Schneidwerk nach Anspruch 2 oder 3, **dadurch gekennzeichnet, dass** die Zunahme des Rückstellmoments im zweiten Abschnitt (42) praktisch unendlich ist.

5. Schneidwerk nach Anspruch 2, 3 oder 4, **dadurch gekennzeichnet, dass** die Rückstellkennlinie einen dritten Abschnitt (43) zwischen dem ersten und dem zweiten Abschnitt (41; 42) aufweist, und dass die Zunahme des Rückstellmoments mit der Auslenkung im dritten Abschnitt (43) größer als im ersten (41) und kleiner als im zweiten Abschnitt (42) ist.

6. Schneidwerk nach einem der Ansprüche 2 bis 5, **dadurch gekennzeichnet, dass** der erste Abschnitt (41) die Neutralstellung einschließt und sich über ein Winkelintervall von wenigstens 5° erstreckt.

7. Schneidwerk nach einem der Ansprüche 2 bis 6, **dadurch gekennzeichnet, dass** der erste Abschnitt (41) sich über ein Winkelintervall von höchstens 20° erstreckt.

8. Schneidwerk nach einem der vorhergehenden Ansprüche, **dadurch gekennzeichnet, dass** das drehspielhaltige Element (34) zwischen zwei Anschlägen verdrehbar ist.

9. Schneidwerk nach einem der vorhergehenden Ansprüche, **dadurch gekennzeichnet, dass** der Antriebsstrang (9, 10, 11, 13, 14) ein torsionselastisches Element (25) umfasst.

10. Schneidwerk nach Anspruch 9, **dadurch gekennzeichnet, dass** das torsionselastische Element (25) eine Hülse (28) aus Elastomermaterial mit einer inneren und einer äußeren Umfangsfläche umfasst und dass eine der Umfangsflächen mit einem antriebsseitigen Abschnitt (26; 27) des Antriebsstrangs und die andere Umfangsfläche mit einem messerseitigen Abschnitt (27; 26) des Antriebsstrangs (9, 10, 11, 13, 14) kraftschlüssig verbunden ist.

11. Schneidwerk nach einem der vorhergehenden Ansprüche, **dadurch gekennzeichnet, dass** eine Einzugwalze (7) an den Antriebsstrang (9, 10, 11, 13, 14) gekoppelt ist und dass das drehspielhaltige Element (34) zwischen der Einzugwalze (7) und dem ersten Messer (5; 5r) angeordnet ist.

12. Schneidwerk nach einem der Ansprüche 1 bis 10, **dadurch gekennzeichnet, dass** eine Einzugwalze (7) über das drehspielhaltige Element (34) angetrieben ist.

13. Schneidwerk nach Anspruch 11 oder 12, **dadurch gekennzeichnet, dass** ein zweites Messer (51) über den Antriebsstrang (9, 10, 11, 13) und die Einzugwalze (7) angetrieben ist.

14. Schneidwerk nach einem der vorhergehenden Ansprüche, **dadurch gekennzeichnet, dass** eine Schwungmasse (17) zwischen dem drehspielhaltigen Element (25) und dem ersten Messer (5; 5r) im Antriebsstrang angeordnet ist.

15. Schneidwerk nach einem der vorhergehenden Ansprüche, **dadurch gekennzeichnet, dass** der Exzenter (15) zwei gelenkig verbundene Arme (22, 20) umfasst, von denen ein erster (22) mit dem Antriebsstrang drehbar ist und der zweite (20) an das Messer (5) angelenkt ist.

## Claims

1. A header for a harvester comprising a carrier frame (1, 2, 3), at least one first blade (5; 5r) displaceable in the carrier frame (1, 2, 3), a rotationally drivable drive train (9, 10, 11, 13, 14) rotatable in itself for the first blade (5; 5r) and an eccentric (15) for converting a rotation of the drive train (9, 10, 11, 13, 14) into an oscillating movement of the first blade (5, 5r), **characterised in that** the drive train (9, 10, 11, 13, 14) includes at least one rotary play-bearing element (34) which has a nonlinear return characteristic.

2. A header according to claim 1 **characterised in that** starting from a neutral position the return characteristic has at least one first portion (41) at a slight deflection and a second portion (42) at a larger deflection, wherein the increase in the return moment is markedly greater with the deflection in the second portion (42) than in the first portion (41).

3. A header according to claim 2 **characterised in that** the return moment is negligible in the first portion (41).

4. A header according to claim 1 or claim 2 **characterised in that** the increase in the return moment in the second portion (42) is practically infinite.

5. A header according to claim 2, claim 3 or claim 4 **characterised in that** the return characteristic has a third portion (43) between the first and the second portions (41; 42) and that the increase in the return moment with the deflection in the third portion (43) is greater than in the first portion (41) and less than in the second portion (42).

6. A header according to one of claims 2 to 5 **characterised in that** the first portion (41) includes the neutral position and extends over an angular range of at least 5°.

7. A header according to one of claims 2 to 6 **characterised in that** the first portion (41) extends over an angular range of at most 20°.

8. A header according to one of the preceding claims **characterised in that** the rotary play-bearing element (34) is rotatable between two abutments.

9. A header according to one of the preceding claims **characterised in that** the drive train (9, 10, 11, 13, 14) includes a torsionally elastic element (25).

10. A header according to claim 9 **characterised in that** the torsionally elastic element (25) includes a sleeve (28) of elastomer material with an inner and an outer peripheral surface and that one of the peripheral surfaces is connected in force-locking relationship to a drive-side portion (26; 27) of the drive train and the other peripheral surface is connected in force-locking relationship to a blade-side portion (27; 26) of the drive train (9, 10, 11, 13, 14).

11. A header according to one of the preceding claims **characterised in that** an intake roller (7) is coupled to the drive train (9, 10, 11, 13, 14) and the rotary play-bearing element (34) is arranged between the intake roller (7) and the first blade (5; 5r).

12. A header according to one of claims 1 to 10 **characterised in that** an intake roller (7) is driven by way of the rotary play-bearing element (34).

13. A header according to claim 11 or claim 12 **characterised in that** a second blade (51) is driven by way of the drive train (9, 10, 11, 13) and the intake roller (7).

14. A header according to one of the preceding claims **characterised in that** a flywheel mass (17) is arranged between the rotary play-bearing element (25) and the first blade (5; 5r) in the drive train.

15. A header according to one of the preceding claims **characterised in that** the eccentric (15) includes two pivotally connected arms (22, 20) of which a first (22) is rotatable with the drive train and the second (20) is pivotally connected to the blade (5).

## Revendications

1. Tablier de coupe pour une machine de récolte, comprenant un cadre porteur (1, 2, 3), au moins une première lame (5 ; 5r) apte à coulisser dans le cadre porteur (1, 2, 3), une chaîne de transmission (9, 10, 11, 13, 14) entraînée en rotation, rotative en soi, pour la première lame (5 ; 5r), et un excentrique (15) pour convertir une rotation de la chaîne de transmission (9, 10, 11, 13, 14) en un mouvement oscillant de la première lame (5 ; 5r), **caractérisé en ce que** la chaîne de transmission (9, 10, 11, 13, 14) comprend au moins un élément à jeu de rotation (34) qui présente une courbe caractéristique de rappel non linéaire.

2. Tablier de coupe selon la revendication 1, **caractérisé en ce que**, à partir d'une position neutre, la courbe caractéristique de rappel comporte au moins une première portion (41) à faible déviation et une deuxième portion (42) à plus grande déviation, l'accroissement du couple de rappel en fonction de la déviation étant plus grand dans la deuxième portion (42) que dans la première portion (41).

3. Tablier de coupe selon la revendication 2, **caractérisée en ce que** le couple de rappel dans la première (41) portion est négligeable.

4. Tablier de coupe selon la revendication 2 ou 3, **caractérisé en ce que** l'augmentation du couple de rappel dans la deuxième portion (42) est pratiquement infinie.

5. Tablier de coupe selon la revendication 2, 3 ou 4, **caractérisé en ce que** la courbe caractéristique de rappel comporte une troisième portion (43) entre la première et la deuxième portion (41 ; 42), et **en ce que** l'augmentation du couple de rappel en fonction de la déviation dans la troisième portion (43) est plus grand que dans la première portion (41) et plus petit que dans la deuxième (42).

6. Tablier de coupe selon une des revendications 2 à 5, **caractérisé en ce que** la première portion (41) englobe la position neutre et s'étend sur un intervalle angulaire d'au moins 5°.

7. Tablier de coupe selon une des revendications 2 à 6, **caractérisé en ce que** la première portion (41) s'étend sur un intervalle angulaire d'au plus 20°.

8. Tablier de coupe selon une des revendications précédentes, **caractérisé en ce que** l'élément à jeu de rotation (34) est rotatif entre deux butées.

9. Tablier de coupe selon une des revendications précédentes, **caractérisé en ce que** la chaîne de transmission (9, 10, 11, 13, 14) comprend un élément à élasticité torsionnelle (25).

10. Tablier de coupe selon la revendication 9, **caractérisé en ce que** l'élément à élasticité torsionnelle (25) comprend un manchon (28) en matériau élastomère avec des surfaces périphériques extérieure et intérieure, et **en ce qu'**une des surfaces périphériques est reliée par conjugaison de forces à une portion côté transmission (26 ; 27) de la chaîne de transmission, et l'autre surface périphérique est reliée par conjugaison de forces à une portion côté lame (27 ; 26) de la chaîne de transmission (9, 10, 11, 13, 14).

11. Tablier de coupe selon une des revendications précédentes, **caractérisé en ce qu'**un rouleau d'alimentation (7) est couplé à la chaîne de transmission (9, 10, 11, 13, 14), et **en ce que** l'élément à jeu de rotation (34) est disposé entre le rouleau d'alimentation (7) et la première lame (5 ; 5r).

12. Tablier de coupe selon une des revendications 1 à 10, **caractérisé en ce qu'**un rouleau d'alimentation (7) est entraîné par l'intermédiaire de l'élément à jeu de rotation (34).

13. Tablier de coupe selon la revendication 11 ou 12, **caractérisé en ce qu'**une seconde lame (51) est entraînée par l'intermédiaire de la chaîne de transmission (9, 10, 11, 13, 14) et du rouleau d'alimentation (7).

14. Tablier de coupe selon une des revendications précédentes, **caractérisé en ce qu'**une masse d'inertie (17) est disposée sur la chaîne de transmission entre l'élément à jeu de rotation (25) et la première lame (5 ; 5r).

15. Tablier de coupe selon une des revendications précédentes, **caractérisé en ce que** l'excentrique (15) comporte deux bras à liaison articulée (22, 20) dont un premier (22) peut tourner avec la chaîne de transmission et dont le second (20) est articulé sur la lame (5).
